# EUROPÄISCHE PATENTSCHRIFT

(11) **EP 3 149 288 B1**
(45) Veröffentlichungstag und Bekanntmachung des Hinweises auf die Patenterteilung: **28.08.2019**
(21) Anmeldenummer: 15723517.7
(22) Anmeldetag: 20.05.2015
(51) Int. Cl.: F01D 25/28, G01P 21/02, F01D 17/06

(54) **DEMONTAGEVERFAHREN FÜR GASTURBINEN UND KALIBRIERVORRICHTUNG**
DISASSEMBLY METHOD FOR GAS TURBINES AND CALIBRATION DEVICE
PROCÉDÉ DE DÉSASSEMBLAGE POUR TURBINES À GAZ ET DISPOSITIF DE CALIBRAGE

(30) Priorität: 30.05.2014 DE 102014210297
(43) Veröffentlichungstag der Anmeldung: 05.04.2017
(60) Teilanmeldung: 17183923.6
(73) Patentinhaber: Lufthansa Technik AG, 22335 Hamburg (DE)
(72) Erfinder: ALBERT, Rainer, 22359 Hamburg (DE); PINKOWSKY, Tanja, 22179 Hamburg (DE); MALCHOW, Andina, 25469 Halstenbek (DE); BOBSIEN, Dennis, 25451 Quickborn (DE)
(74) Vertreter: Müller Verweyen
(86) Internationale Anmeldenummer: PCT/EP2015/061091
(87) Internationale Veröffentlichungsnummer: WO 2015/181017

(56) Entgegenhaltungen:
- EP-A2- 2 543 868
- WO-A1-2012/107248
- DE-A1- 19 643 336
- DE-A1-102007 055 239
- GB-A- 2 177 160
- US-A1- 2013 199 206
- "Futterrohre - UGA SYSTEM-TECHNIK", , 30. Mai 2013 (2013-05-30), XP055231772, Gefunden im Internet: URL:https://web.archive.org/web/2013053010 5427/http://www.uga.eu/de/produkte/futterr ohre/fu/ [gefunden am 2015-11-26]

## Beschreibung

Die Erfindung betrifft ein Demontageverfahren für eine Gasturbine mit den Merkmalen des Oberbegriffs von Anspruch 1. Die Erfindung betrifft des Weiteren eine Fixiervorrichtung und eine Führungsvorrichtung.

Bei aus dem Stand der Technik bekannten Gasturbinen, insbesondere bei Gasturbinen für Flugzeuge, nachfolgend Triebwerk genannt, handelt es sich um sogenannte Zweiwellentriebwerke. Ein Beispiel für Zweiwellentriebwerke sind die Triebwerke vom Typ V2500-A5 von International Aero Engines (IAE). Eine innere N1 (Niederdruck) Welle dient hier zur Übertragung eines Drehmoments zwischen der Niederdruckturbine und dem Niederdruckverdichter; eine die N1 Welle koaxial umgebende N2 (Hochdruck) Welle überträgt das Drehmoment von einer Hochdruckturbine zu einem Hochdruckverdichter. Im vorderen Bereich des Triebwerks ist die N1 Welle drehfest mit einem Niederdruckverdichter verbunden, wobei die drehfeste Verbindung auch über Zwischenelemente umgesetzt werden kann. Dieser Abschnitt des Niederdrucksystems bildet mit dem Gasturbinengehäuse einen Zwischenraum. Insbesondere der Bereich, in dem der vordere Teil der N1 Welle gegenüber dem Gasturbinengehäuse gelagert ist, ist für Instandhaltungsmaßnahmen nur schwer zugänglich; dieser Bereich wird als vorderer Lagerbereich oder als "Front Bearing Compartment" bzw. "No. 3 Bearing, Internal Gearbox and Support Assemblies" bezeichnet. Durch die im Betrieb auftretenden Verschleißmechanismen müssen die Komponenten im vorderen Lagerbereich bestimmten Instandhaltungsmaßnahmen unterworfen werden. Zu besonders hohen Aufwänden führen Instandhaltungsmaßnahmen, die in schwer zugänglichen Bereichen, wie z.B. dem vorderen Lagerbereich, durchgeführt werden müssen. Bei planmäßigen Instandhaltungsereignissen können diese Maßnahmen während einer Überholung des Triebwerks in einer Werkstatt durchgeführt werden. Treten Probleme an Komponenten, die nur über den vorderen Lagerraum zugänglich sind, unplanmäßig auf, so muss eine aufwendige Demontage von zumindest Teilsystemen der Gasturbine durchgeführt werden, um Zugang zu dem vorderen Lagerbereich zu erlangen. Die damit einhergehenden Konsequenzen sind hohe Arbeitsaufwände, lange Durchlaufzeiten und hohe Folgekosten durch Flugverspätungen und Annullierungen.

Müssen im vorderen Lagerbereich Instandhaltungsmaßnahmen, wie z.B. die Inspektion oder der Wechsel von Komponenten, durchgeführt werden, dann erfolgt dies nach einem bekannten vorgegebenen Ablauf.

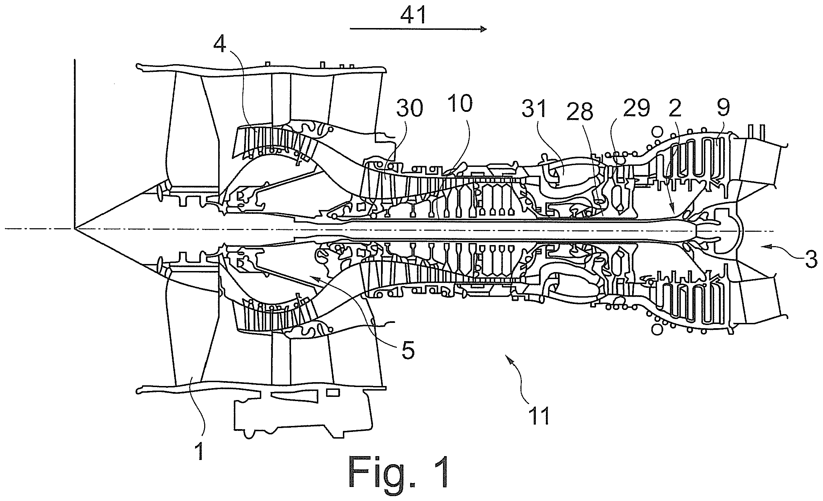

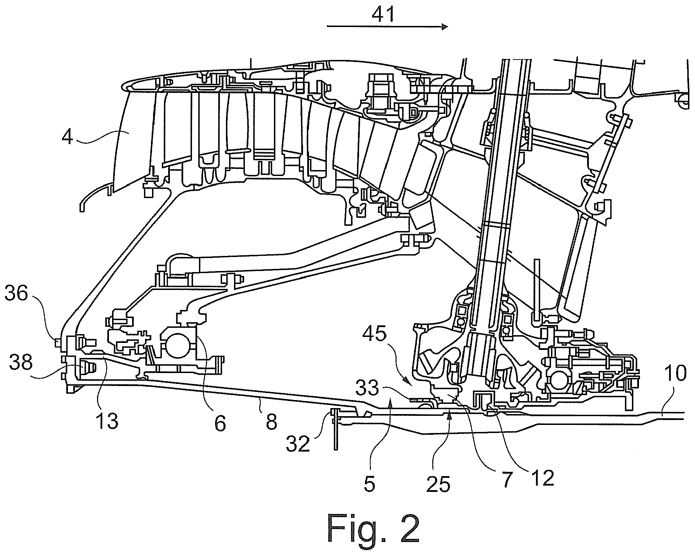

Dieser bekannte Ablauf sieht vor, dass zunächst das Triebwerk vom Flügel des Flugzeugs abgenommen werden muss, um anschließend zu einer Werkstatt transportiert zu werden. Unter Zuhilfenahme der Fig. 1 und Fig. 2 soll das bekannte Verfahren kurz erläutert werden.

In der Werkstatt werden in einem ersten Schritt alle für die weitere Zerlegung notwendigen Anlagen, wie z.B. Rohrleitungen, Kabel und Haltebleche, und Geräte am Kerntriebwerk entfernt. In einem zweiten Schritt wird ein Niederdruckturbinenmodul 2, das sog. "Low Pressure Turbine Module", und ein Abgasgehäuse 3, das sog. "Exhaust Case", demontiert. Das Niederdruckturbinenmodul 2 umfasst dabei die Niederdruckturbine 9 und die N1 Welle 10. In einem dritten Schritt wird anschließend ein Fanmodul 1 entfernt. In einem vierten Schritt wird dann der Niederdruckverdichter 4, der sog. "Low Pressure Compressor", entfernt. Um nun in einem weiteren Schritt den vorderen Lagerbereich 5 für Instandhaltungsmaßnahmen zugänglich zu machen, wird eine erste und zweite Lagereinheit 6 und 7 zusammen mit einer Flanschwelle 8, dem "Low Pressure Stub Shaft", nach vorne aus dem Triebwerk gezogen. Die Trennung der Flanschwelle 8 mit der ersten und zweiten Lagereinheit 6 und 7 von der Gasturbine 11 erfolgt an der Stelle einer hydraulischen Dichtung 12, dem sog. "Hydraulic Seal". Durch Verwendung einer speziell dafür vorgesehenen Vorrichtung wird eine entsprechende Kraft in axialer Richtung aufgebracht, so dass die erste und zweite Lagereinheit 6 und 7 mit der Flanschwelle 8 nach vorne aus der Gasturbine 11 gezogen bzw. geschoben werden können. Die spezielle Vorrichtung macht es zwingend erforderlich, dass die N1 Welle 10 entfernt wird, da die Vorrichtung in den Innenbereich der hydraulischen Dichtung 12 eingreift, die normalerweise über eine Presspassung mit der N1 Welle 10 verbunden ist. Durch dieses bekannte Demontageverfahren erlangt man Zugang zu dem vorderen Lagerbereich 5 und kann dort verschiedene Instandhaltungsmaßnahmen durchführen. Typische Instandhaltungsmaßnahmen, die in diesem Bereich durchgeführt werden, sind z.B. der Wechsel eines Geschwindigkeitssensors, der sog. "Speed Probe", oder eines Positionsgebers, der sog. "Trim Balance Probe", oder des von innen nach außen führenden Kabelbaumes, der sog. "Electrical Harness". Nach der Durchführung der Instandhaltungsmaßnahmen folgt der Montageprozess, der im Wesentlichen dem umgekehrten Demontageprozess entspricht.

Das bis hier beschriebene und aus dem Stand der Technik bekannte Vorgehen ist sehr zeitaufwändig, da alle an der äußeren Gehäusewandung liegenden Geräte, Rohre und Kabel entfernt werden müssen, um das beschriebene Demontageverfahren durchführen zu können. Das Triebwerk muss damit in hohem Maße demontiert werden, um Zugang zu dem vorderen Lagerbereich zu erlangen.

Ferner ist es nachteilig, dass es mit dem beschriebenen Verfahren nicht möglich ist, Zugang zum vorderen Lagerbereich bei einem noch an der Tragfläche des Flugzeugs hängenden Triebwerk, also "On-Wing", zu erlangen.

Die Offenlegungsschrift DE 196 43 336 A1 beschreibt ein Verfahren, mit dem ein stirnseitiges Lagergehäuse oder ein Niederdruck-Verdichter-Wellenteil demontiert werden kann, ohne dass das Triebwerk von der Tragfläche abmontiert werden muss. Hierzu wird die N1-Welle des Triebwerks sowohl in Axialrichtung als auch in Rotationsrichtung fixiert. Das stirnseitige Lagergehäuse oder das Niederdruck-Verdichter-Wellenteil wird anschließend an einem Hebewerkzeug befestigt, so dass die ausgebauten Komponenten bei der Bewegung nach vorne aus dem Triebwerk gestützt werden. Die in der DE 196 43 336 A1 vorgeschlagene Hebevorrichtung ist nicht mit der Gasturbine verbunden, sondern wird beispielsweise durch einen Kranhaken in Position gehalten. Nachteilig an dieser Lösung ist, dass eine Stützwirkung nur im vorderen, direkt zugänglichen Bereich des Triebwerks erreicht werden kann, also dort, wo das Hebewerkzeug mit dem Kranhaken verbunden ist. Ein beschädigungsfreier Ausbau von Komponenten des Triebwerks kann damit nur dann erfolgen, wenn diese in einem vorderen Bereich des Triebwerks angeordnet sind, in dem sie während des Demontagevorgangs von der Hebevorrichtung ausreichend gestützt werden können. Ein weiterer Nachteil ist, dass die Hebevorrichtung relativ zum Triebwerk, insbesondere in ihrer Höhe, justiert werden muss, um einen beschädigungsfreien Ein- bzw. Ausbau der Komponenten zu ermöglichen.

Aus der Offenlegungsschrift DE 10 2011 009 770 A1 ist ein Verfahren zum Wechseln einer Dichtungsplatte bzw. einer Lagereinheit bekannt. Bei diesem Verfahren wird eine Teilmotoreinheit umfassend einen Kernmotor und eine Niederdruckturbine aus dem Triebwerk demontiert. In einem weiteren Schritt kann anschließend die Dichtungsplatte an der Teilmotoreinheit gewechselt werden. Im ausgebauten Zustand der Teilmotoreinheit kann alternativ oder zusätzlich auch eine Lagereinheit, die zur Lagerung der N2 Welle dient, gewechselt werden.

Aus der EP 2 543 868 A2 ist eine Vorrichtung zur Demontage eines Rotors einer Gasturbine bekannt mit einer Haltevorrichtung, die an einem Teil des Turbinengehäuses befestigt ist, wobei ein Ausleger, bestehend aus einer Trägerstrebe und Stützstreben vorgesehen ist. An der Trägerstrebe ist eine Haltevorrichtung in einer Schiene geführt, die dazu eingerichtet ist mittels eines Hakenelements an dem Rotor befestigt zu werden und den Rotor entlang der Führungsschiene von der Gasturbine zu entfernen.

Die Offenlegungsschrift WO 2012/107248 A1 zeigt ein Verfahren zum Abziehen eines Lagerkörpers vom Rotor einer Gasturbine. Dabei ist an dem entsprechenden Ende des Rotors ein Wellenfortsatz angebracht und gleichzeitig wird der Rotor gehalten, um den Lagerkörper von dem Gewicht des Rotors zu befreien. Durch Einfügen von Gleitelementen zwischen dem Lagerkörper und dem Rotor kann der Lagerkörper entlang der Maschinenwelle auf den Wellenfortsatz geschoben und dort postiert werden.

Die Offenlegungsschrift GB 2 177 160 ist ein Verfahren zur Wartung einer Gasturbine gezeigt. Dabei wird ein Hilfsrahmen verwendet, der eine lineare Führungsschiene umfasst, die sich parallel zur Motorachse erstreckt. Entlang dieser Führungsschiene ist eine Hebevorrichtung in Form einer freien Aufhängung vorgesehen mit dem ein Lagerkörper gehalten und entlang der Motorachse verschoben werden kann.

Der Erfindung liegt die Aufgabe zugrunde, ein Demontageverfahren bereitzustellen, mit dem der vordere Lagerbereich zur Durchführung von Instandhaltungsmaßnahmen mit reduziertem Aufwand zugänglich gemacht werden kann. Weiter liegt der Erfindung die Aufgabe zugrunde, eine Fixiervorrichtung und eine Führungsvorrichtung zur vereinfachten Durchführung des Demontageverfahrens bereitzustellen.

Die Erfindung löst diese Aufgabe mit den Merkmalen der unabhängigen Ansprüche. Weitere bevorzugte Ausführungsformen der Erfindung sind den Unteransprüchen, den Figuren sowie der dazugehörigen Beschreibung zu entnehmen.

Gemäß dem Grundgedanken der Erfindung wird zur Lösung der Aufgabe ein Demontageverfahren vorgeschlagen, das mindestens die folgenden Schritte umfasst:
a) Demontage des Fanmoduls, und
b) Fixieren der N1 Welle in axialer Richtung gegenüber dem Gasturbinengehäuse mit einer Fixiervorrichtung, und
c) Demontage der Flanschwelle unter Zuhilfenahme einer Führungsvorrichtung, deren Ausrichtung gegenüber der Gasturbine in wenigstens einer Raumrichtung durch eine Komponente der verbleibenden Gasturbine festgelegt ist, wobei dies nach dem Fixieren der N1 Welle und nach der Demontage des Fanmoduls erfolgt.

Durch die Verwendung der Führungsvorrichtung kann die Flanschwelle in einer vorgegebenen Demontagebewegung nach vorne aus dem Triebwerk gezogen werden. Ein Vorteil dieses Verfahrens besteht darin, dass die Ausrichtung der Führungsvorrichtung in wenigstens einer Raumrichtung durch eine Komponente der verbleibenden Gasturbine festgelegt ist. Unter einer Komponente der verbleibenden Gasturbine ist eine Komponente zu verstehen, die während des Demontageverfahrens in der Gasturbine verbleibt. Vorzugsweise wird die Führungsvorrichtung durch eine Komponente der Gasturbine gelagert, die axial hinter dem direkt zugänglichen vorderen Bereich der Gasturbine liegt; vorzugsweise erfolgt diese Abstützung an der N1 Welle. Weiter vorzugsweise wird die Führungsvorrichtung zusätzlich in einem direkt zugänglichen vorderen Bereich der Gasturbine gestützt. Hierin besteht ein wesentlicher Vorteil im Vergleich zu dem aus der DE 196 43 336 A1 bekannten Verfahren. Durch einen zusätzlichen axial nach hinten verschobenen Abstützpunkt der Führungsvorrichtung innerhalb der Gasturbine ist die Führungsvorrichtung an zwei axial auseinanderliegenden Punkten gelagert. Im Vergleich zu einer Hebevorrichtung kann durch die Führungsvorrichtung somit während der gesamten axialen Demontagebewegung eine zuverlässige Führung und Abstützung der auszubauenden Komponente erfolgen. Der Demontageaufwand und die Gefahr von Beschädigungen während des Ein- bzw. Ausbaus der Flanschwelle kann damit reduziert werden. Eine gesonderte Hebevorrichtung ist damit nicht erforderlich, wodurch eine Demontage auch an Orten vorgenommen werden kann, wo keine Hebevorrichtung zur Verfügung steht.

Durch das erfindungsgemäße Verfahren kann das Niederdruckturbinenmodul, das die Niederdruckturbine und die N1 Welle umfasst, während des Demontageverfahrens in der Gasturbine verbleiben. Im vorderen Bereich des Triebwerks müssen lediglich das Fanmodul und die Flanschwelle entfernt werden, um Zugang zum vorderen Lagerbereich zu erhalten. Durch die Fixierung der N1 Welle in axialer Richtung kann die Flanschwelle nach vorne aus der Gasturbine gezogen werden und so die Verbindung zwischen der Flanschwelle und der N1 Welle gelöst werden. Zum Lösen der Verbindung zwischen der Flanschwelle und der N1 Welle sind große Axialkräfte erforderlich, die ohne die Fixierung des Niederdruckturbinenmoduls zu Beschädigungen am Triebwerk bzw. an dem Niederdruckturbinenmodul führen könnten. Durch das Entfallen des Ausbaus des Niederdruckturbinenmoduls kann mit dem erfindungsgemäßen Verfahren eine erhebliche Zeit- und Kostenersparnis bewirkt werden. Weiter wird durch das vorgeschlagene Verfahren der Umfang der Demontage so weit reduziert, dass die Durchführung auch "On Wing" möglich ist.

Vorzugsweise umfasst das Demontageverfahren vor dem Verfahrensschritt b) zumindest die folgenden Verfahrensschritte:
d) Demontage eines Abgaskonus, und anschließend
e) Montage einer Fixiervorrichtung an der Stelle des Abgaskonus, und anschließend
f) Verbinden der N1 Welle mit der Fixiervorrichtung.

Das Fixieren der N1 Welle kann mit den Verfahrensschritten d) bis f) besonders einfach erfolgen, da lediglich der Abgaskonus durch eine Fixiervorrichtung ersetzt werden muss. Die Fixiervorrichtung wird damit genau an der Stelle befestigt, an der im montierten Zustand der Abgaskonus angeordnet ist. Das Fixieren der N1 Welle in axialer Richtung kann so an der Austrittsseite der Gasturbine, an der die N1 Welle leicht zugänglich ist, erfolgen. Weiter bietet der ringförmige Innenflansch, an dem normalerweise der Abgaskonus befestigt ist, eine ideale Befestigungsmöglichkeit für die Fixiervorrichtung. Zusätzlich kann durch die axiale Fixierung der N1 Welle im Austrittsbereich der Gasturbine im vorderen Lagereich ungehindert gearbeitet werden und so vorzugsweise die Flanschwelle nach vorne aus der Gasturbine gezogen bzw. geschoben werden.

Vorzugsweise umfasst der Verfahrensschritt c) zumindest die folgenden Verfahrensschritte:
g) Lösen sämtlicher Verbindungen zwischen der Flanschwelle und der N1 Welle, und anschließend
h) Lösen sämtlicher Verbindungen zwischen der Flanschwelle und einer Verbindungswelle, und anschließend
i) Anbringen einer Pressvorrichtung zum axialen Trennen der N1 Welle von der Flanschwelle, wobei die Pressvorrichtung sowohl mit der N1 Welle als auch mit der Flanschwelle verbunden wird, und anschließend
j) Einleiten einer Kraft in die Flanschwelle und in die N1 Welle über die Pressvorrichtung, die so gerichtet ist, dass die Flanschwelle und die N1 Welle in axialer Richtung auseinander bewegt werden.

Durch die Verfahrensschritte g) bis j) kann erreicht werden, dass zunächst die Flanschwelle mit geringem Aufwand demontiert werden kann. Unter dem Lösen sämtlicher Verbindungen in den Verfahrensschritten g) und h) ist das Lösen von aktiv lösbaren Verbindungsmitteln zu verstehen, vorzugsweise werden diese aktiv lösbaren Verbindungsmittel durch Reib- bzw. Formschlusselemente, z.B. durch Schraubverbindungen, gebildet. Die Flanschwelle ist zum einen mit der Verbindungswelle über eine erste Schraubverbindung drehfest verbunden, wobei diese Verbindung durch Standardwerkzeug gelöst werden kann. Zum anderen ist die Flanschwelle über eine Pressverbindung und über eine zweite Schraubverbindung mit der N1 Welle drehfest verbunden. Auch die zweite Schraubverbindung kann mit Standardwerkzeug gelöst werden. Zum Lösen der Pressverbindung wird eine Pressvorrichtung eingesetzt, bei der es sich vorzugsweise um eine Hydraulikpresse handelt. Die Pressvorrichtung wird zum Lösen der Pressverbindung mit der Flanschwelle und mit der N1 Welle verbunden. Durch Betätigung der Pressvorrichtung übt diese auf die Flanschwelle und die N1 Welle eine axiale Kraft aus, durch die die Flanschwelle in axialer Richtung nach vorne geschoben wird. Durch die axiale Fixierung der N1 Welle über die Fixiervorrichtung kann die Pressvorrichtung durch die N1 Welle gestützt werden, ohne dass es zu einer Beschädigung kommt. Vorzugsweise wird das Lösen der Pressverbindung durch eine Kühlung der N1 Welle und weiter vorzugsweise durch eine zusätzliche Erwärmung der Flanschwelle unterstützt.

Es wird weiter vorgeschlagen, dass als zusätzlicher Verfahrensschritt k) die Flanschwelle während der axialen Demontagebewegung nach vorne durch die Führungsvorrichtung in radialer Richtung gestützt wird. Das Stützen der Flanschwelle durch eine Führungsvorrichtung hat den Vorteil, dass die Flanschwelle mit geringem Aufwand nach vorne aus der Gasturbine bewegt werden kann. Durch die Führung der Bewegung der Flanschwelle können Beschädigungen an der Flanschwelle selbst und an angrenzenden Gasturbinenbauteilen verhindert werden. Zusätzlich ergibt sich der Vorteil, dass beim späteren Montageverfahren die Flanschwelle so geführt wird, dass sie mit geringem Aufwand in die gewünschte Position bewegt werden kann.

Ferner ist es vorteilhaft, wenn die Führungsvorrichtung an einem Gasturbinengehäuse des Niederdruckverdichters befestigt wird. Vorzugsweise wird die Führungsvorrichtung im Bereich des Einlaufs an dem Gasturbinengehäuse befestigt. Eine Befestigung der Führungsvorrichtung an der Gasturbine hat den Vorteil, dass Relativbewegungen zwischen der Führungsvorrichtung und der Gasturbine vermieden werden können. Dies ist insbesondere bei an der Tragfläche montierten Triebwerken vorteilhaft, so dass das erfindungsgemäße Demontageverfahren auch "On Wing" durchgeführt werden kann. Die Führungsvorrichtung umfasst vorzugsweise eine Haltevorrichtung und ein Führungsrohr. Durch die Befestigung der Führungsvorrichtung an dem Gasturbinengehäuse im Bereich des Einlaufs kann das Führungsrohr so positioniert werden, dass die Flanschwelle über das Führungsrohr nach vorne abgezogen werden kann. Die Flanschwelle umgibt das Führungsrohr während des Abziehvorgangs koaxial.

Vorzugsweise wird in dem Verfahrensschritt c) die Flanschwelle und der Niederdruckverdichter demontiert. Durch die zusätzliche Demontage des Niederdruckverdichters wird die Möglichkeit geschaffen, einen erweiterten Zugang zu erlangen und so zusätzliche Instandhaltungsmaßnahmen durchzuführen.

Vorzugsweise werden im Verfahrensschritt c) zusätzlich die erste Lagereinheit und die Verbindungswelle demontiert, wobei dies nach der Demontage des Niederdruckverdichters erfolgt. Durch den Ausbau des Niederdruckverdichters sowie der ersten Lagereinheit kann ein erweiterter Zugang zum vorderen Lagerbereich geschaffen werden. Dieser erweiterte Zugang ermöglicht es, die im Bereich der zweiten Lagereinheit sitzenden Fühler bzw. Sensoren inklusive deren Halterungen ein- bzw. auszubauen. Insbesondere erhält man durch diesen zusätzlichen Verfahrensschritt Zugang zu einem Rohr, das Kabelleitungen zu den Fühlern bzw. zu der Sensorik führt. Neben dem Ein- und Ausbau von Komponenten können durch den erweiterten Zugang vorzugsweise auch weiterführende Inspektionen durchgeführt werden. Ohne Anwendung des erfindungsgemäßen Verfahrens ist dieser erweiterte Zugang nur durch einen hohen Zerlegungsgrad der Gasturbine möglich.

Ferner wird vorgeschlagen, dass im Anschluss an die Verfahrensschritte a) bis c) ein weiterer Verfahrensschritt 1) zum Wechsel zumindest eines Teilsystems eines Sensorsystems vorgesehen ist. Vorzugsweise wird dabei ein Positionsgeber, die sog. "Trim Balance Probe", oder ein Geschwindigkeitssensor, die sog. "Speed Probe", gewechselt.

Vorzugsweise beinhaltet der Verfahrensschritt 1) zusätzlich die Kalibrierung des Sensorsystems, wobei das Sensorsystem im Wesentlichen einen Sensor und einen Taktgeber, das sog. "Phonic Wheel", umfasst, wobei für die Kalibrierung der Abstand zwischen einem Taktgeber und einem Fühlerkopf unter Zuhilfenahme einer Kalibriervorrichtung gemessen wird und der gemessene Abstand dann entsprechend eingestellt wird. Bei dem bekannten Verfahren erfolgt die Kalibrierung mithilfe eines Kalibrierrings, dem sog. "Dummy Phonic Wheel", wobei die radial nach außen zeigende Mantelfläche des Kalibrierrings die Mantelfläche des Taktgebers nachbildet. Der aus dem Stand der Technik bekannte Kalibrierring kann nur bei ausgebauter N1 Welle und ausgebauter zweiter Lagereinheit verwendet werden. Durch das Verwenden einer speziell für das erfindungsgemäße Verfahren konzipierten Kalibriervorrichtung kann die Kalibrierung des Geschwindigkeitssensors ohne den Ausbau der N1 Welle und der zweiten Lagereinheit erfolgen.

Ferner wird vorgeschlagen, dass die Kalibriervorrichtung an der zweiten Lagereinheit angeordnet wird. Die Kalibriervorrichtung kann durch die zweite Lagereinheit so positioniert werden, dass der Außenradius des Taktgebers zuverlässig von einer Außenfläche der Kalibriervorrichtung simuliert werden kann. Vorzugsweise greift die Kalibriervorrichtung dafür formkorrespondierend in die Innenfläche der zweiten Lagereinheit.

Es wird weiter vorgeschlagen, dass im Verfahrensschritt c) zusätzlich eine zweite Lagereinheit demontiert wird. Es kann damit beispielsweise ein Wechsel der zweiten Lagereinheit vorgenommen werden oder weitere Instandhaltungsmaßnahmen durchgeführt werden, die die Demontage der zweiten Lagereinheit erfordern.

Erfindungsgemäß wird eine Fixiervorrichtung zur Durchführung des Demontageverfahrens vorgeschlagen, umfassend eine Fixierstange zur Verbindung der N1 Welle mit der Fixiervorrichtung, und einen Zentrierteller zur Fixierung der Fixierstange, wobei dieser durch einen Teil der Gasturbine in einer definierten Position gehalten wird, wobei an dem Zentrierteller wenigstens ein Befestigungsmittel vorgesehen ist, das dazu geeignet ist, den Zentrierteller anstelle des Abgaskonus an der Gasturbine zu befestigen. Mit Hilfe der Fixiervorrichtung kann die N1 Welle in axialer Richtung fixiert werden. Vorzugsweise ist an der Fläche des Zentriertellers, die im montierten Zustand an dem Abgasgehäuse anliegt, eine Teflonschicht vorgesehen, um Beschädigungen an der Gasturbine zu verhindern. Vorzugsweise wird die Teflonschicht durch eine ringförmige Teflonschicht gebildet. Bevorzugt wird das Befestigungsmittel durch Bohrungen gebildet, wobei die Bohrungen vorzugsweise im Randbereich des Zentriertellers verteilt sind, so dass sie mit den Gewindebohrungen, die zur Befestigung des Abgaskonus dienen, im montierten Zustand übereinstimmen.

Erfindungsgemäß wird eine Führungsvorrichtung vorgeschlagen, die eine mit einem vorderen Teil der Gasturbine verbindbare Haltevorrichtung und ein Führungsrohr umfasst, wobei das Führungsrohr im montierten Zustand durch eine Zentralbohrung in der Haltevorrichtung gelagert ist, wobei das Führungsrohr an einem Ende ein Gewinde zur Verbindung mit der N1 Welle aufweist. Vorzugsweise ist der Außenradius des Führungsrohrs kleiner als der Innenradius der Flanschwelle. Weiter ist der Außenradius des Führungsrohres nicht wesentlich kleiner als der Innenradius der Flanschwelle, so dass die Flanschwelle im Wesentlichen ohne Spiel über das Führungsrohr geschoben werden kann. Die Führungsvorrichtung ermöglicht es auch, bei an der Tragfläche montierten Gasturbinen die Flanschwelle bei einem Ausbau in radialer Richtung zu stützen. Es kann damit sichergestellt werden, dass die Lagereinheiten der Gasturbine während der Montage und Demontage der Flanschwelle entlastet werden. Ferner wird durch die sichere Führung der Flanschwelle über das Führungsrohr eine Beschädigung der Flanschwelle während der Montage bzw. Demontage zuverlässig verhindert.

Die Erfindung wird im Folgenden anhand bevorzugter Ausführungsformen unter Bezugnahme auf die beigefügten Figuren erläutert. Dabei zeigt:
- Fig. 1: eine schematische Darstellung des Aufbaus eines Flugzeugtriebwerks;
- Fig. 2: eine schematische Darstellung des Aufbaus eines vorderen Teilbereichs eines Flugzeugtriebwerks;
- Fig. 3: eine schematische Darstellung einer Fixiervorrichtung;
- Fig. 4: ein mit einer N1 Welle verbundenes Führungsrohr einer Führungsvorrichtung;
- Fig. 5: eine perspektivische Ansicht einer Haltevorrichtung;
- Fig. 6: eine perspektivische Ansicht eines Führungsrohrs;
- Fig. 7: eine erste Ansicht einer Kalibriervorrichtung; und
- Fig. 8: eine zweite Ansicht einer Kalibriervorrichtung.

In der Fig. 1 ist in einer schematischen Darstellung eine Gasturbine 11 in Form eines Flugzeugtriebwerks gezeigt. Nachfolgend wird daher von einem Triebwerk und einem Triebwerksgehäuse gesprochen. Es handelt sich dabei um ein Zweiwellentriebwerk, wobei eine N1 Welle 10 koaxial von einer N2 Welle 28 umgeben ist. Die N1 Welle 10 überträgt ein Rotationsmoment von einer Niederdruckturbine 9 zu einem Fanmodul 1 und einem Niederdruckverdichter 4. Die N2 Welle 28 überträgt ein Rotationsmoment von einer Hochdruckturbine 29 zu einem Hochdruckverdichter 30 und ist gegenüber einem Triebwerksgehäuse gelagert. Zwischen dem Hochdruckverdichter 30 und der Hochdruckturbine 29 ist eine Brennkammer 31 angeordnet. Die N1 Welle 10 und die Niederdruckturbine 4 bilden dabei ein Niederdruckturbinenmodul 2. Das Triebwerk wird in der Reihenfolge Fanmodul 1, Niederdruckverdichter 4, Hochdruckverdichter 30, Brennkammer 31, Hochdruckturbine 29, Niederdruckturbine 9 von einer Luftmasse durchströmt; dies entspricht der Richtung eines Pfeils 41 in den Fig. 1 bis Fig. 4. Nachfolgend ist mit der Richtungsangabe "nach hinten" eine Bewegung in Richtung des Pfeils 41 gemeint; die Richtungsangabe "nach vorne" beschreibt eine Bewegung entgegen der Richtung des Pfeils 41. Die Angaben "axial" und "radial" beziehen sich auf die Rotationsachse des Triebwerks, also der N1 Welle 10.

In der Fig. 2 ist eine schematische Darstellung des Aufbaus eines vorderen Teilbereichs eines Flugzeugtriebwerks gezeigt. Die N1 Welle 10 ist über eine Presspassung mit einer Flanschwelle 8 drehfest verbunden, wobei die Verbindung zwischen der N1 Welle 10 und der Flanschwelle 8 in axialer Richtung durch eine Verschraubung 32 gesichert ist. Die Verschraubung 32 bildet damit ein aktiv lösbares Verbindungsmittel im Sinne der Erfindung. Die N1 Welle 10 ist in einem Teilbereich koaxial von der Flanschwelle 8 umgeben. Über eine zweite Lagereinheit 7 wird die Flanschwelle 8 und damit auch die N1 Welle 10 gegenüber dem Triebwerksgehäuse gelagert. Im Bereich der zweiten Lagereinheit 7 ist ein Sensorsystem 45 vorgesehen, wobei durch einen Taktgeber 33 in Abhängigkeit der Drehfrequenz der N1 Welle 10 ein Signal erzeugt wird, das über einen Fühlerkopf detektiert wird. In Abhängigkeit des Signals kann so die Drehzahl der N1 Welle 10 gemessen werden. Die Flanschwelle 8 ist wiederum über eine Verbindungswelle 13 mit dem Niederdruckverdichter 4 drehfest verbunden. Die Verbindungswelle 13 ist über eine erste Lagereinheit 6 in dem Triebwerksgehäuse gelagert. Soweit entspricht der Aufbau beispielsweise dem Triebwerkstyp V2500-A5 von IAE.

Nachfolgend wird das erfindungsgemäße Verfahren am Beispiel des Triebwerkstyps V2500-A5 von IAE beschrieben. Es sei jedoch darauf hingewiesen, dass das erfindungsgemäße Verfahren auch bei anderen Triebwerkstypen zum Einsatz kommen kann, darunter fällt beispielsweise der Triebwerkstyp V2500-D5 von IAE. Darüber hinaus ist auch ein Einsatz bei anderen Triebwerkstypen und bei stationären Gasturbinen mit entsprechendem Aufbau möglich.

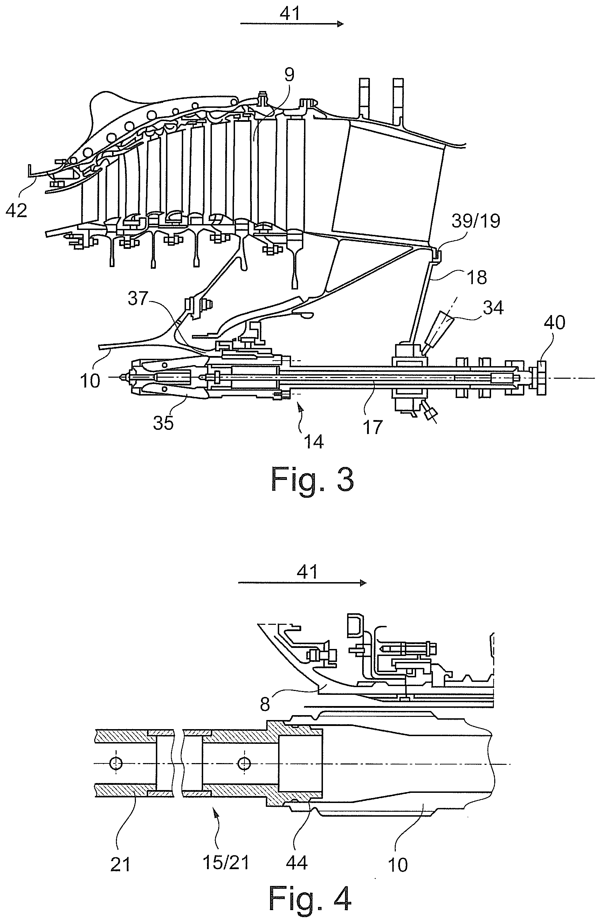

In den Fig. 1 und Fig. 2 ist das Triebwerk in einem montierten und damit einsatzfähigen Zustand gezeigt, während in den Fig. 3 und Fig. 4 die Demontage des Triebwerks in verschiedenen Verfahrensschritten zu erkennen ist. Zur Durchführung des erfindungsgemäßen Verfahrens wird in einem ersten Schritt vorzugsweise das Fanmodul 1 demontiert.

In einem zweiten Schritt erfolgt vorzugsweise die Fixierung der Niederdruckturbine 9. Vorzugsweise wird hierzu eine erfindungsgemäße Fixiervorrichtung 14 verwendet, siehe Fig. 3.

Fig. 3 zeigt die erfindungsgemäße Fixiervorrichtung 14 in einer schematischen Darstellung. Die Fixiervorrichtung 14 umfasst eine Fixierstange 17, einen Zentrierteller 18, einen Expander 35, einen Griff 40 und ein Handrad 34. Der Zentrierteller 18 dient dazu, die Fixierstange 17 gegenüber der N1 Welle so auszurichten, dass deren Längsachsen im Wesentlichen deckungsgleich sind. Weiter dient der Zentrierteller 18 dazu, die Fixiervorrichtung 14 in axialer Richtung gegenüber dem Triebwerksgehäuse zu fixieren. Der Griff 40 ist über eine mechanische Wirkverbindung mit dem Expander 35 verbunden, so dass dieser geöffnet und gesperrt werden kann. Der Expander 35 befindet sich in einer gesperrten Stellung, wenn dieser in radialer Richtung erweitert ist; in diesem Zustand kann der Expander 35 eine formschlüssige Verbindung zwischen einem Endabschnitt 37 der N1 Welle 10 und der Fixierstange 17 herstellen. Der Zentrierteller 18 weist wenigstens ein Befestigungsmittel 19 auf, durch das der Zentrierteller 18 mit einem Innenflansch 39 des Abgasgehäuses 3 verbindbar ist. Vorzugsweise ist an der Fläche des Zentriertellers 18, die im montierten Zustand an dem Innenflansch 39 anliegt, eine Teflonschicht vorgesehen. Damit kann eine Beschädigung des Innenflansches 39 vermieden werden; alternativ können jedoch auch andere Schutzschichtarten verwendet werden. Über das Handrad 34 kann die Fixierstange 17 in axialer Richtung relativ zu dem Zentrierteller 18 bewegt werden und somit die N1 Welle 10 fixiert werden.

In dem zweiten Schritt des erfindungsgemäßen Demontageverfahrens wird zunächst der Abgaskonus vom Innenflansch 39 des Abgaskonus demontiert, wodurch die N1 Welle 10 im hinteren Triebwerksbereich zugänglich gemacht wird. Durch Betätigung des Griffs 40 wird der Expander 35 in die geöffnete Stellung gebracht, so dass dieser in den Endabschnitt 37 der N1 Welle 10 bewegbar ist. Durch das Befestigungsmittel 19 an dem Zentrierteller 18 wird die Fixiervorrichtung 14 in radialer und axialer Richtung gegenüber dem Triebwerksgehäuse fixiert. Anschließend wird der Griff 40 betätigt und somit der Expander 35 in die gesperrte Stellung gebracht, in der die Fixierstange 17 formschlüssig so mit der N1 Welle 10 verbunden ist, dass eine Axialbewegung der N1 Welle 10 verhindert wird. Über eine Drehbewegung des Handrads 34 wird nun die Fixierstange 17 in axialer Richtung nach hinten bewegt, so dass die N1 Welle 10 über die Fixiervorrichtung 14 mit dem Triebwerksgehäuse so verspannt ist, dass im vorderen Bereich des Triebwerks die weiteren Demontageschritte vorgenommen werden können. Die N1 Welle 10 ist in diesem Zustand in axialer Richtung fixiert.

In einem dritten Schritt des erfindungsgemäßen Verfahrens kann nun vorzugsweise entweder die Flanschwelle 8 und/oder der Niederdruckverdichter 4 demontiert werden. Nachfolgend wird beispielhaft die Alternative beschrieben, bei der die Flanschwelle 8 und der Niederdruckverdichter 4 demontiert werden.

Vorzugsweise wird zunächst der Niederdruckverdichter 4 demontiert, wobei hierzu eine Verbindung 36 zwischen der Verbindungswelle 13 und dem Niederdruckverdichter 4 gelöst wird. Darauf folgt die Demontage der Flanschwelle 8, die nach vorne aus dem Triebwerk gezogen wird, wobei das Niederdruckturbinenmodul 2 eingebaut bleibt; ein Verbindungsflansch 42 des Niederdruckturbinengehäuses muss damit nicht gelöst werden. Die Verbindung 38 zwischen der Verbindungswelle 13 und der Flanschwelle 8 wurde bereits bei der Demontage des Fanmoduls 1 gelöst; die Verbindung 38 bildet dabei ein aktiv lösbares Verbindungsmittel im Sinne der Verbindung. Die Flanschwelle 8 und die Verbindungswelle 13 sind somit in diesem Verfahrensschritt nur noch über eine Presspassung miteinander verbunden. Die Verbindungswelle 13 verbleibt dabei im Triebwerk und wird von der ersten Lagereinheit 6 gehalten; der Ausbau der Verbindungswelle 13 erfolgt dann später. Die Flanschwelle 8 ist mit der N1 Welle 10 über eine Presspassung verbunden. Vorzugsweise wird zum Lösen der Presspassung die koaxial innen liegende N1 Welle 10 gekühlt. Vorzugsweise kann zusätzlich die koaxial außen liegende Flanschwelle 8 erwärmt werden. Um die Flanschwelle 8 von der N1 Welle 10 in axialer Richtung zu trennen, wird eine Pressvorrichtung verwendet, die vorzugsweise durch eine Hydraulikpresse gebildet wird. Die Hydraulikpresse wird an einer ersten Seite, die im montierten Zustand in Richtung des Pfeils 41 zeigt, über ein Gewinde mit einem Innengewinde der N1 Welle 10 verschraubt und an der zweiten Seite mit einer Art Bajonettverschluss formschlüssig mit der Flanschwelle 8 verbunden. Die Hydraulikpresse übt bei Druckbeaufschlagung auf die N1 Welle 10 und auf die Flanschwelle 8 eine entgegengesetzt wirkende Axialkraft aus. Die Hydraulikpresse kann sich dabei an der N1 Welle 10 in axialer Richtung gegenüber einer Bewegung nach hinten abstützen. Dies führt dazu, dass die Flanschwelle 8 in axialer Richtung nach vorne aus dem Triebwerk bewegt wird, bis der Bereich der Presspassung überwunden ist. Wenn dieser Zustand erreicht ist, wird die Hydraulikpumpe vorzugsweise wieder demontiert.

Anschließend wird die Flanschwelle 8 vorzugsweise unter Zuhilfenahme einer Führungsvorrichtung 15 vollständig demontiert.

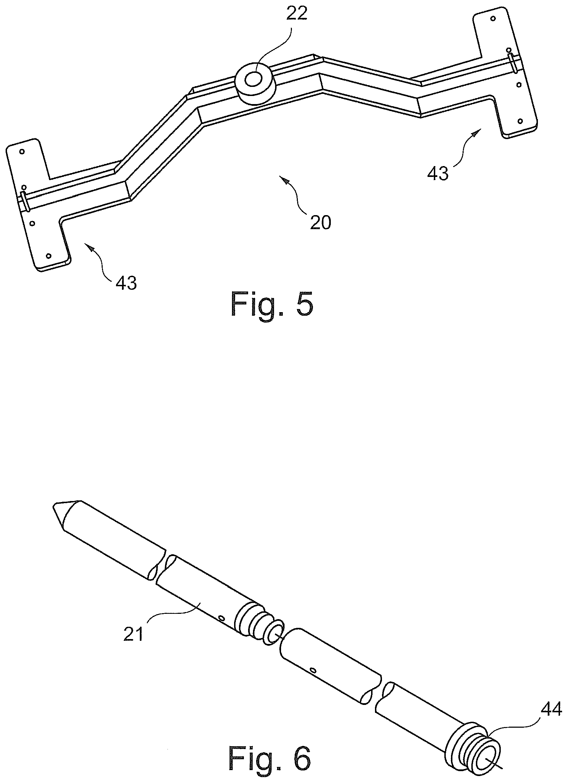

In den Fig. 4 bis Fig. 6 sind die Komponenten der Führungsvorrichtung 15 dargestellt. Die Führungsvorrichtung 15 umfasst ein Führungsrohr 21 (siehe Fig. 4 und Fig. 6), das im montierten Zustand über eine Zentralbohrung 22 in einer Haltevorrichtung 20 gestützt ist (siehe Fig. 5). Die Haltevorrichtung 20 wird vorzugsweise mit zwei Befestigungsabschnitten 43 mit dem Triebwerksgehäuse eines vorderen Triebwerksbereichs verbunden. Vorzugsweise werden die Befestigungsabschnitte 43 mit einem Bereich des Einlaufs verbunden. Bevorzugt wird die Verbindung zwischen dem Triebwerksgehäuse und den Befestigungsabschnitten 43 über eine Schraubverbindung hergestellt. Die Haltevorrichtung 20 ist vorzugsweise so geformt, dass der Bereich der Zentralbohrung 22 außerhalb der Ebene der Befestigungsabschnitte 43 liegt. Vorzugsweise liegt der Bereich der Zentralbohrung 22 in einem Abstand von 20 cm bis 40 cm außerhalb der Ebene der Befestigungsabschnitte 43, weiter vorzugsweise ca. 30 cm. Es wird damit erreicht, dass die Flanschwelle 8 problemlos aus dem Triebwerk gezogen werden kann, ohne dass die Bewegung durch die Haltevorrichtung behindert wird. Das Führungsrohr 21 hat einen Durchmesser, der kleiner ist als der Innendurchmesser der Flanschwelle 8. Der Durchmesser der Zentralbohrung 22 ist so bemessen, dass er mit dem Durchmesser des Führungsrohres 21 formkorrespondiert. An einem Ende des Führungsrohres 21 ist ein Gewinde 44 vorgesehen, das so ausgelegt ist, dass es mit dem Innengewinde der N1 Welle 10 verschraubt werden kann. Im montierten Zustand ist das Führungsrohr 21 somit an zwei axial auseinanderliegenden Punkten in radialer Richtung gelagert.

Gemäß dem erfindungsgemäßen Verfahren wird das Führungsrohr 21 durch die Flanschwelle 8 geführt und so das Ende des Führungsrohrs 21 mit dem Gewinde 44 von vorne in Richtung des Pfeils 41 bis zu dem vorderen Ende der N1 Welle 10 geschoben. Anschließend wird die Haltevorrichtung 20 so positioniert, dass das Führungsrohr 21 in der Zentralbohrung 22 der Haltevorrichtung 20 gelagert ist. In dieser Position wird die Haltevorrichtung 20 dann mit den Befestigungsabschnitten 43 an dem vorderen Bereich des Triebwerks befestigt. Sobald das Führungsrohr 21 mit der N1 Welle 10 in Kontakt ist, wird das Führungsrohr 21 entlang seiner Längsachse so in Rotation versetzt, so dass das Gewinde 44 in das Innengewinde der N1 Welle 10 eindrehen kann und so die N1 Welle 10 mit dem Führungsrohr 21 verbunden wird. Die Flanschwelle 8 umgibt das Führungsrohr 21 nun koaxial, wodurch die Flanschwelle 8 bei der Bewegung nach vorne aus dem Triebwerk in radialer Richtung gestützt wird. Durch die Stützwirkung des Führungsrohrs 21 können Beschädigungen an der Flanschwelle 8 während des Demontageverfahrens vermieden und eine einfache Handhabbarkeit gewährleistet werden. Das Führungsrohr 21 dient auch bei einem auf das Demontageverfahren folgende Montageverfahren zur vereinfachten Montage der Flanschwelle 8.

In einem vierten Schritt des erfindungsgemäßen Verfahrens wird vorzugsweise die erste Lagereinheit 6 und/oder die zweite Lagereinheit 7, je nachdem welche Instandhaltungsmaßnahmen durchgeführt werden sollen, demontiert. Bevorzugt wird das vorgeschlagene Demontageverfahren für den Austausch oder die Inspektion von wenigstens einem Sensorsystem 45 im Bereich der zweiten Lagereinheit 7 verwendet. Es wird hier als Beispiel für das Sensorsystem der Wechsel eines Geschwindigkeitsmessers, der sogenannte "Speed Probe", erläutert. Alternativ kann mit dem erfindungsgemäßen Verfahren z.B. auch der Positionsgeber zum Detektieren von Vibrationen, die sogenannte "Trim Balance Probe", oder das elektrische Kabel, das sogenannte "Fan Speed/Trim Balance Probes Harness", gewechselt werden.

Durch den Ausbau der Flanschwelle 8 erlangt man soweit Zugang zu einem vorderen Lagerbereich 5, dass ein Ein- bzw. Ausbau des Geschwindigkeitssensors problemlos möglich ist. Durch das erfindungsgemäße Verfahren ist auch die Verkabelung des Geschwindigkeitssensors zugänglich, wodurch auch an der Verkabelung Instandhaltungsmaßnahmen durchgeführt werden können. Nach dem Einbau des Geschwindigkeitssensors muss dieser kalibriert werden. Hierzu ist es zunächst erforderlich, den Abstand zwischen dem Fühlerkopf und dem Taktgeber 33 zu ermitteln. Eine aus dem Stand der Technik bekannte Vorrichtung zur Kalibrierung des Geschwindigkeitssensors kann bei dem erfindungsgemäßen Demontageverfahren nicht verwendet werden, da hierzu die N1 Welle 10 ausgebaut werden müsste. Es wird daher eine modifizierte Kalibriervorrichtung 16 zur Kalibrierung des Geschwindigkeitssensors verwendet.

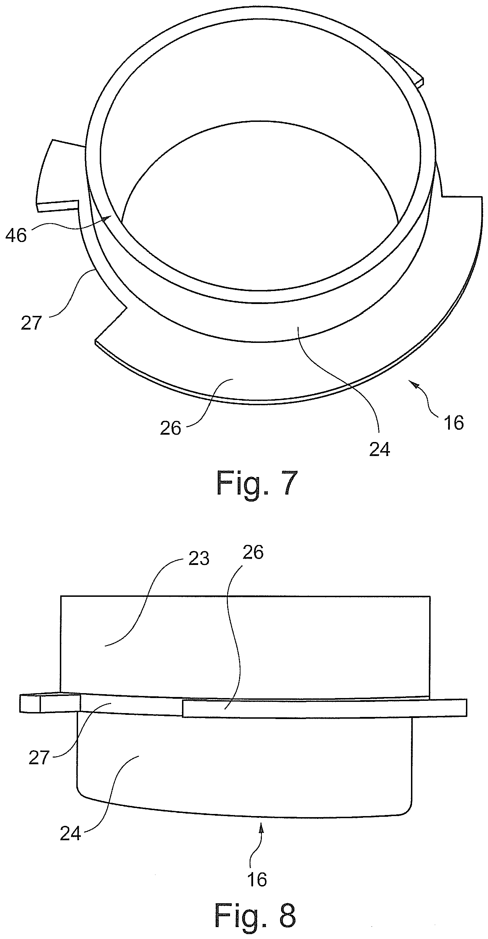

Die Kalibriervorrichtung 16 ist in den Fig. 7 und Fig. 8 in verschiedenen Perspektiven dargestellt und umfasst ein ringförmiges Grundelement 46. Der Innenradius der Kalibriervorrichtung 16 ist so bemessen, dass die Kalibriervorrichtung 16 über die N1 Welle 10 in eine Kalibrierposition bewegt werden kann. Die Kalibrierposition ist die Position, in der eine erste Außenfläche 23 der Kalibriervorrichtung 16 die Position der Außenfläche des eingebauten Taktgebers 33 einnimmt. Die Kalibriervorrichtung 16 weist einen Vorsprung 26 auf, der in der Kalibrierposition als Anlage an der zweiten Lagereinheit 7 dient. Es wird somit durch den Vorsprung 26 die Kalibrierposition in axialer Richtung festgelegt. In dem Vorsprung 26 sind vorzugsweise mindestens vier Aussparungen 27 vorgesehen, die dazu dienen, die Kalibriervorrichtung 16 in axialer Richtung an Hindernissen vorbei in die Kalibrierposition bewegen zu können. Eine zweite Außenfläche 24 ist dabei so ausgebildet, dass sie in der Kalibrierposition formkorrespondierend mit dem Innenradius der zweiten Lagereinheit 7 verbunden ist; die Kalibrierposition der Kalibriervorrichtung 16 ist somit eindeutig festgelegt.

Zur Durchführung des Verfahrens wird die Kalibriervorrichtung 16 über die N1 Welle 10 von vorne in die Kalibrierposition bewegt. Die Kalibrierposition ist erreicht, wenn der Vorsprung 26 an der nach vorne gerichteten Seitenfläche der zweiten Lagereinheit 7 anliegt; die zweite Außenfläche 24 greift dabei formkorrespondierend in die Innenfläche 25 der zweiten Lagereinheit 7. In dieser Position simuliert die erste Außenfläche 23 die Außenfläche des Taktgebers 33. Es kann nun der Abstand zwischen dem Sensorkopf und dem Taktgeber 33 gemessen werden und anschließend der Geschwindigkeitssensor auf den gemessenen Wert eingestellt werden. Die Kalibriervorrichtung 16 kann anschließend wieder entfernt werden.

Vorangehend wurde ausschließlich die Demontage des Triebwerks beschrieben. Die Montage des Triebwerks kann analog zu der Demontage in umgekehrter Reihenfolge erfolgen.

## Patentansprüche

1. Demontageverfahren für Gasturbinen (11) zum Austausch und/oder zur Inspektion und/oder zur Reparatur von in einem vorderen Lagerbereich (5) der Gasturbine (11) angeordneten Bauteilen, wobei
- die Gasturbine (11) zumindest ein Fanmodul (1), ein Gasturbinengehäuse, ein Niederdrucksystem und ein Hochdrucksystem umfasst, wobei
- das Niederdrucksystem einen Niederdruckverdichter (4), eine Niederdruckturbine (9), eine Verbindungswelle (13), eine Flanschwelle (8) und eine N1 Welle (10) umfasst, wobei
- die N1 Welle (10) über die Flanschwelle (8) und über die Verbindungswelle (13) mit dem Niederdruckverdichter (4) verbunden ist, wobei
- die Verbindungswelle (13) über eine erste Lagereinheit (6) in dem Gasturbinengehäuse gelagert ist, und
- die Flanschwelle (8) über eine zweite Lagereinheit (7) in dem Gasturbinengehäuse gelagert ist, wobei
- das Demontageverfahren mindestens die folgenden Schritte umfasst:
a) Demontage des Fanmoduls (1), und
b) Fixieren der N1 Welle (10) in axialer Richtung gegenüber dem Gasturbinengehäuse mit einer Fixiervorrichtung (14), und **gekennzeichnet durch**
c) Demontage der Flanschwelle (8) unter Zuhilfenahme einer Führungsvorrichtung (15), deren Ausrichtung gegenüber der Gasturbine (11) in wenigstens einer Raumrichtung durch eine Komponente der verbleibenden Gasturbine (11) festgelegt ist, wobei die Führungsvorrichtung (15) durch eine Komponente der Gasturbine (11) gelagert wird, wobei dies nach dem Fixieren der N1 Welle (10) und nach der Demontage des Fanmoduls (1) erfolgt.

2. Demontageverfahren nach Anspruch 1, **dadurch gekennzeichnet, dass** das Demontageverfahren
- nach Verfahrensschritt a) und vor Verfahrensschritt b) zumindest die folgenden Verfahrensschritte umfasst:
d) Demontage eines Abgaskonus, und anschließend
e) Montage einer Fixiervorrichtung (14) an der Stelle des Abgaskonus, und anschließend
f) Verbinden der N1 Welle (10) mit der Fixiervorrichtung (14) .

3. Demontageverfahren nach einem der vorangehenden Ansprüche, **dadurch gekennzeichnet, dass**
- der Verfahrensschritt c) zumindest die folgenden Verfahrensschritte umfasst:
g) Lösen sämtlicher Verbindungen zwischen der Flanschwelle (8) und der N1 Welle (10), und anschließend
h) Lösen sämtlicher Verbindungen zwischen der Flanschwelle (8) und der Verbindungswelle (13), und anschließend
i) Anbringen einer Pressvorrichtung zum axialen Trennen der N1 Welle (10) von der Flanschwelle (8), wobei die Pressvorrichtung sowohl mit der N1 Welle (10) als auch mit der Flanschwelle (8) verbunden wird, und anschließend
j) Einleiten einer Kraft in die Flanschwelle (8) und in die N1 Welle (10) über die Pressvorrichtung, die so gerichtet ist, dass die Flanschwelle (8) und die N1 Welle (10) in axialer Richtung auseinander bewegt werden.

4. Demontageverfahren nach Anspruch 3, **dadurch gekennzeichnet, dass**
- die Führungsvorrichtung (15) an einem Gasturbinengehäuse des Niederdruckverdichters (4) befestigt wird.

5. Demontageverfahren nach Anspruch 4, **dadurch gekennzeichnet, dass**
- als zusätzlicher Verfahrensschritt
k) die Flanschwelle (8) während der axialen Demontagebewegung nach vorne durch die Führungsvorrichtung (15) in radialer Richtung gestützt wird.

6. Demontageverfahren nach einem der vorangehenden Ansprüche, **dadurch gekennzeichnet, dass**
- in dem Verfahrensschritt c) die Flanschwelle (8) und der Niederdruckverdichter (4) demontiert werden.

7. Demontageverfahren nach Anspruch 6, **dadurch gekennzeichnet, dass**
- im Verfahrensschritt c) zusätzlich die erste Lagereinheit (6) und die Verbindungswelle (13) demontiert werden, wobei dies nach der Demontage des Niederdruckverdichters erfolgt.

8. Demontageverfahren nach einem der Ansprüche 1 bis 7,
**dadurch gekennzeichnet, dass**
- im Verfahrensschritt c) zusätzlich die zweite Lagereinheit (7) demontiert wird.

9. Fixiervorrichtung (14) zur Durchführung eines Demontageverfahrens für Gasturbinen (11), wobei
- die Gasturbine (11) zumindest ein Fanmodul (1), ein Gasturbinengehäuse, ein Niederdrucksystem und ein Hochdrucksystem umfasst, wobei
- das Niederdrucksystem einen Niederdruckverdichter (4), eine Niederdruckturbine (9), eine Verbindungswelle (13), eine Flanschwelle (8) und eine N1 Welle (10) umfasst, wobei
- die N1 Welle (10) über die Flanschwelle (8) und über die Verbindungswelle (13) mit dem Niederdruckverdichter (4) verbunden ist, wobei
- die Verbindungswelle (13) über eine erste Lagereinheit (6) in dem Gasturbinengehäuse gelagert ist, und
- die Flanschwelle (8) über eine zweite Lagereinheit (7) in dem Gasturbinengehäuse gelagert ist, **gekennzeichnet durch**
- eine Fixierstange (17) zur Verbindung der N1 Welle (10) mit der Fixiervorrichtung (14), wobei ein Expander (35) an einem Ende der Fixierstange (17) dazu vorgesehen ist, eine formschlüssige Verbindung mit einem Endabschnitt (37) der N1 Welle (10) herzustellen, und
- einen Zentrierteller (18) zur Fixierung der Fixierstange (17), wobei dieser durch einen Teil der Gasturbine (11) in einer definierten Position gehalten wird, wobei
- an dem Zentrierteller (18) wenigstens ein Befestigungsmittel (19) vorgesehen ist, das dazu geeignet ist, den Zentrierteller (18) anstelle eines Abgaskonus an der Gasturbine (11) zu befestigen.

10. Führungsvorrichtung (15) zur Durchführung des Demontageverfahrens für Gasturbinen (11), wobei
- die Gasturbine (11) zumindest ein Fanmodul (1), ein Gasturbinengehäuse, ein Niederdrucksystem und ein Hochdrucksystem umfasst, wobei
- das Niederdrucksystem einen Niederdruckverdichter (4), eine Niederdruckturbine (9), eine Verbindungswelle (13), eine Flanschwelle (8) und eine N1 Welle (10) umfasst, wobei
- die N1 Welle (10) über die Flanschwelle (8) und über die Verbindungswelle (13) mit dem Niederdruckverdichter (4) verbunden ist, wobei
- die Verbindungswelle (13) über eine erste Lagereinheit (6) in dem Gasturbinengehäuse gelagert ist, und
- die Flanschwelle (8) über eine zweite Lagereinheit (7) in dem Gasturbinengehäuse gelagert ist, **dadurch gekennzeichnet, dass**
- die Führungsvorrichtung (15) eine mit einem vorderen Teil der Gasturbine (11) verbindbare Haltevorrichtung (20), und
- ein Führungsrohr (21) umfasst, wobei
- das Führungsrohr (21) im montierten Zustand durch eine Zentralbohrung (22) in der Haltevorrichtung (20) gelagert ist, wobei
- das Führungsrohr (21) an einem Ende ein Gewinde (44) zur Verbindung mit der N1 Welle (10) aufweist.

## Claims

1. Disassembly method for gas turbines (11) for replacing and/or inspecting and/or repairing components arranged in a front bearing region (5) of the gas turbine (11),
- the gas turbine (11) comprising at least one fan module (1), a gas turbine housing, a low-pressure system and a high-pressure system,
- the low-pressure system comprising a low-pressure compressor (4), a low-pressure turbine (9), a connecting shaft (13), a stub shaft (8) and an N1 shaft (10),
- the N1 shaft (10) being connected to the low-pressure compressor (4) via the stub shaft (8) and via the connecting shaft (13),
- the connecting shaft (13) being supported in the gas turbine housing via a first bearing unit (6), and
- the stub shaft (8) being supported in the gas turbine housing via a second bearing unit (7), wherein
- the disassembly method comprises at least the steps of:
a) dismounting the fan module (1), and
b) fixing the N1 shaft (10) in an axial direction relative to the gas turbine housing using a fixing device (14),
and **characterised by**
c) dismounting the stub shaft (8) using a guide device (15), the orientation of which relative to the gas turbine (11) in at least one spatial direction is determined by a component of the remaining gas turbine (11), wherein the guide device (15) is supported by a component of the gas turbine (11), this taking place after the N1 shaft (10) has been fixed and after the fan module (1) has been dismounted.

2. Disassembly method according to claim 1, **characterised in that** the disassembly method
- after method step a) and before method step b) comprises at least the method steps of:
d) dismounting an exhaust gas cone, and then
e) mounting a fixing device (14) in the location of the exhaust gas cone, and then
f) connecting the N1 shaft (10) to the fixing device (14).

3. Disassembly method according to any of the preceding claims, **characterised in that**
- the method step c) comprises at least the method steps of:
g) releasing all the connections between the stub shaft (8) and the N1 shaft (10), and then
h) releasing all the connections between the stub shaft (8) and the connecting shaft (13) and then
i) fitting a press device for axially separating the N1 shaft (10) from the stub shaft (8), the press device being connected both to the N1 shaft (10) and to the stub shaft (8), and then
j) introducing a force into the stub shaft (8) and into the N1 shaft (10) via the press device, which is oriented such that the stub shaft (8) and the N1 shaft (10) are moved apart in the axial direction.

4. Disassembly method according to claim 3, **characterised in that**
- the guide device (15) is attached to a gas turbine housing of the low-pressure compressor (4).

5. Disassembly method according to claim 4, **characterised in that**
- as an additional method step
k) the stub shaft (8) is supported in the radial direction by the guide device (15) during the axial forward dismounting movement.

6. Disassembly method according to any of the preceding claims, **characterised in that**
- in method step c), the stub shaft (8) and the low-pressure compressor (4) are dismounted.

7. Disassembly method according to claim 6, **characterised in that**
- in method step c), the first bearing unit (6) and the connecting shaft (13) are also dismounted, this taking place after the low-pressure compressor has been dismounted.

8. Disassembly method according to any of claims 1 to 7, **characterised in that**
- in method step c), the second bearing unit (7) is also dismounted.

9. Fixing device (14) for carrying out a disassembly method for gas turbines (11),
wherein
- the gas turbine (11) comprises at least one fan module (1), a gas turbine housing, a low-pressure system and a high-pressure system, wherein
- the low-pressure system comprises a low-pressure compressor (4), a low-pressure turbine (9), a connecting shaft (13), a stub shaft (8) and an N1 shaft (10), wherein
- the N1 shaft (10) is connected to the low-pressure compressor (4) via the stub shaft (8) and via the connecting shaft (13), wherein
- the connecting shaft (13) is supported in the gas turbine housing via a first bearing unit (6), and
- the stub shaft (8) is supported in the gas turbine housing via a second bearing unit (7), **characterised by**
- a fixing rod (17) for connecting the N1 shaft (10) to the fixing device (14), wherein an expander (35) at one end of the fixing rod (17) is provided for establishing a connection with an interlocking fit to an end portion (37) of the N1 shaft (10), and
- a centring plate (18) for fixing the fixing rod (17), said plate being held in a defined position by a part of the gas turbine (11), wherein
- at least one attachment means (19) is provided on the centring plate (18), said attachment means being capable of attaching the centring plate (18) to the gas turbine (11) in place of an exhaust gas cone.

10. Guide device (15) for carrying out the disassembly method for gas turbines (11),
wherein
- the gas turbine (11) comprises at least one fan module (1), a gas turbine housing, a low-pressure system and a high-pressure system, wherein
- the low-pressure system comprises a low-pressure compressor (4), a low-pressure turbine (9), a connecting shaft (13), a stub shaft (8) and an N1 shaft (10), wherein
- the N1 shaft (10) is connected to the low-pressure compressor (4) via the stub shaft (8) and via the connecting shaft (13), wherein
- the connecting shaft (13) is supported in the gas turbine housing via a first bearing unit (6), and
- the stub shaft (8) is supported in the gas turbine housing via a second bearing unit (7), **characterised in that**
- the guide device (15) comprises a retaining device (20) which can be connected to a front part of the gas turbine (11), and
- a guide pipe (21), wherein,
- when mounted, the guide pipe (21) is supported by a central hole (22) in the retaining device (20), wherein
- the guide pipe (21) comprises a thread (44) at one end for connection to the N1 shaft (10).

## Revendications

1. Procédé de désassemblage pour turbines à gaz (11) pour remplacement et/ou inspection et/ou réparation de pièces agencées dans un espace de palier avant (5) de la turbine à gaz (11), dans lequel
- la turbine à gaz (11) comprend au moins un module de ventilateur (1), un boîtier de turbine à gaz, un système basse pression et un système haute pression, dans lequel
- le système basse pression comprend un compresseur basse pression (4), une turbine basse pression (9), un arbre de raccordement (13), un arbre à bride (8) et un arbre N1 (10), dans lequel
- l'arbre N1 (10) est raccordé au compresseur basse pression (4) par le biais de l'arbre à bride (8) et par le biais de l'arbre de raccordement (13), dans lequel
- l'arbre de raccordement (13) est posé dans le boîtier de turbine à gaz par le biais d'une première unité de palier (6), et
- l'arbre à bride (8) est posé dans le boîtier de turbine à gaz par le biais d'une deuxième unité de palier (7), dans lequel
- le procédé de désassemblage comprend au moins les étapes suivantes :
a) désassemblage du module de ventilateur (1), et
b) blocage de l'arbre N1 (10) dans la direction axiale par rapport au boîtier de turbine à gaz avec un dispositif de blocage (14), et **caractérisé par**
c) désassemblage de l'arbre de bride (8) à l'aide d'un dispositif de guidage (15), dont l'orientation par rapport à la turbine à gaz (11) est fixée dans au moins une direction de l'espace par un composant de la turbine à gaz (11) restante, dans lequel le dispositif de guidage (15) est supporté par un composant de la turbine à gaz (11), dans lequel ceci s'effectue après le blocage de l'arbre N1 (10) et après le désassemblage du module de ventilateur (1).

2. Procédé de désassemblage selon la revendication 1, **caractérisé en ce que** le procédé de désassemblage
- comprend au moins les étapes de procédé suivantes après l'étape de procédé a) et avant l'étape de procédé b) :
d) désassemblage d'un cône de gaz d'échappement, puis
e) assemblage d'un dispositif de blocage (14) à l'emplacement du cône de gaz d'échappement, puis
f) raccordement de l'arbre N1 (10) au dispositif de blocage (14).

3. Procédé de désassemblage selon l'une des revendications précédentes, **caractérisé en ce que**
- l'étape de procédé c) comprend au moins les étapes de procédé suivantes :
g) desserrage de tous les raccordements entre l'arbre à bride (8) et l'arbre N1 (10), puis
h) desserrage de tous les raccordements entre l'arbre à bride (8) et l'arbre de raccordement (13), puis
i) montage d'un dispositif de compression pour séparer axialement l'arbre N1 (10) de l'arbre à bride (8), dans lequel le dispositif de compression est raccordé aussi bien à l'arbre N1 (10) qu'à l'arbre à bride (8), puis
j) introduction d'une force dans l'arbre à bride (8) et dans l'arbre N1 (10) par le biais du dispositif de compression, lequel est orienté de telle sorte que l'arbre à bride (8) et l'arbre N1 (10) sont déplacés dans la direction axiale en s'éloignant l'un de l'autre.

4. Procédé de désassemblage selon la revendication 3, **caractérisé en ce que**
- le dispositif de guidage (15) est fixé sur un boîtier de turbine à gaz du compresseur basse pression (4).

5. Procédé de désassemblage selon la revendication 4, **caractérisé en ce que**
- en tant qu'étape de procédé supplémentaire
k) l'arbre à bride (8) est soutenu par le dispositif de guidage (15) dans la direction radiale pendant le mouvement de désassemblage axial vers l'avant.

6. Procédé de désassemblage selon l'une des revendications précédentes, **caractérisé en ce que**
- dans l'étape de procédé c) l'arbre à bride (8) et le compresseur basse pression (4) sont désassemblés.

7. Procédé de désassemblage selon la revendication 6, **caractérisé en ce que**
- dans l'étape de procédé c), en outre, la première unité de palier (6) et l'arbre de raccordement (13) sont désassemblées, dans lequel ceci est effectué après le désassemblage du compresseur basse pression.

8. Procédé de désassemblage selon l'une des revendications 1 à 7, **caractérisé en ce que**
- dans l'étape de procédé c), en outre, la deuxième unité de palier (7) est désassemblée.

9. Dispositif de blocage (14) destiné à la mise en oeuvre d'un procédé de désassemblage pour turbines à gaz (11), dans lequel
- la turbine à gaz (11) comprend au moins un module de ventilateur (1), un boîtier de turbine à gaz, un système basse pression et un système haute pression, dans lequel
- le système basse pression comprend un compresseur basse pression (4), une turbine basse pression (9), un arbre de raccordement (13), un arbre à bride (8) et un arbre N1 (10), dans lequel
- l'arbre N1 (10) est raccordé au compresseur basse pression (4) par le biais de l'arbre à bride (8) et par le biais de l'arbre de raccordement (13), dans lequel
- l'arbre de raccordement (13) est posé dans le boîtier de turbine à gaz par le biais d'une première unité de palier (6), et
- l'arbre à bride (8) est posé dans le boîtier de turbine à gaz par le biais d'une deuxième unité de palier (7), **caractérisé par**
- une barre de blocage (17) pour le raccordement de l'arbre N1 (10) au dispositif de blocage (14), dans lequel un expanseur (35) est prévu à une extrémité de la barre de blocage (17) de façon à établir un raccord par complémentarité de forme avec une section terminale (37) de l'arbre N1 (10), et
- un disque de centrage (18) pour le blocage de la barre de blocage (17), dans lequel celui-ci est maintenu dans une position définie par une partie de la turbine à gaz (11), dans lequel
- au moins un moyen de fixation (19) est prévu sur le disque de centrage (18), lequel est adapté pour fixer le disque de centrage (18) en lieu et place d'un cône de gaz d'échappement sur la turbine à gaz (11).

10. Dispositif de guidage (15) destiné à la mise en oeuvre du procédé de désassemblage pour turbines à gaz (11), dans lequel
- la turbine à gaz (11) comprend au moins un module de ventilateur (1), un boîtier de turbine à gaz, un système basse pression et un système haute pression, dans lequel
- le système basse pression comprend un compresseur basse pression (4), une turbine basse pression (9), un arbre de raccordement (13), un arbre à bride (8) et un arbre N1 (10), dans lequel
- l'arbre N1 (10) est raccordé au compresseur basse pression (4) par le biais de l'arbre à bride (8) et par le biais de l'arbre de raccordement (13), dans lequel
- l'arbre de raccordement (13) est posé dans le boîtier de turbine à gaz par le biais d'une première unité de palier (6), et
- l'arbre à bride (8) est posé dans le boîtier de turbine à gaz par le biais d'une deuxième unité de palier (7), **caractérisé en ce que**
- le dispositif de guidage (15) comprend un dispositif de maintien (20) raccordable à une partie avant de la turbine à gaz (11), et
- un tube de guidage (21), dans lequel
- le tube de guidage (21) est posé dans le dispositif de maintien (20) par un alésage central (22) à l'état assemblé, dans lequel
- le tube de guidage (21) comporte à une extrémité un filetage (44) pour le raccordement à l'arbre N1 (10).
